# EUROPEAN PATENT APPLICATION

(11) **EP 4 279 293 A1**
(43) Date of publication of application: **22.11.2023**
(21) Application number: 22174422.0
(22) Date of filing: 19.05.2022
(51) Int. Cl.: B43K 23/00, B43K 23/02

(54) **PEN HOLDER FOR A VEHICLE COCKPIT, PREFERABLY AN AIRCRAFT COCKPIT AND METHOD FOR MANUFACTURING**

(71) Applicant: Airbus Operations GmbH, 21129 Hamburg (DE)
(72) Inventor: Cusack, Neil, 21129 Hamburg (DE)
(74) Representative: KASTEL Patentanwälte PartG mbB

(57) **Abstract**

In order to improve longevity of pen holders, the invention proposes to form a pen compartment (12) and a pen holding structure (30) by additive manufacturing of a polymer material, such as PA12. The pen is held by friction within the pen compartment (14) and can be easily inserted and removed. Such a pen holder has a usage life of at least 250.000 insertion-removal cycles.

## Description

The invention relates to a pen holder, preferably for a vehicle cockpit such as an aircraft cockpit. The invention also relates to a method of manufacturing the same.

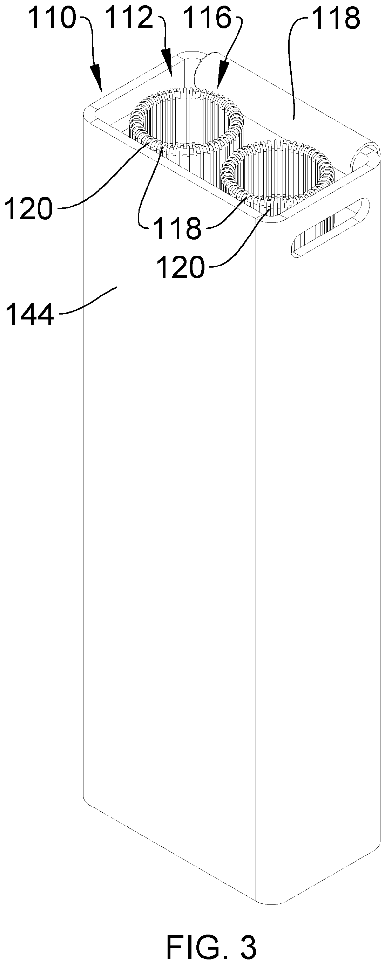

A typical pen holder for an aircraft according to the state of the art is shown in Fig. 3. The pen holder 110 has a box-shaped pen compartment 112. The pen compartment 112 has a compartment wall 114. The pen compartment 112 includes, at least on one end, an opening 116. A pen holding structure 118 is attached to the compartment wall 114. The pen holding structure 118 is made of metal and includes a pair of holding members 120. The holding members 120 are formed by a roughly rectangular spring that forms a circular shape with a holding opening.

These pen holders are a hybrid design formed form a plastic compartment wall and a metallic pen holding structure. Applicant has received feedback from customers that these types of pen holders may break earlier than initially anticipated.

It is the object of the invention to increase the longevity of pen holders for aircraft.

By integrating the clamping function into the main pen holder compartment, the bill of materials can also be reduced further.

The invention provides a pen holder, preferably for a vehicle cockpit, the pen holder configured for holding at least one pen and comprising:
- a pen compartment that is configured for storing the pen and has a compartment wall; and
- a pen holding structure that is arranged within the pen compartment and configured to hold the pen by friction, wherein the pen compartment and the pen holding structure are integrally formed as a single member.

Preferably, the pen compartment and the pen holding structure are formed as a unitary member from a single material.

Preferably, the pen compartment and the pen holding structure are formed as a single member with the pen compartment being made of a first material and the pen holding structure made of a second material different from the first material.

Preferably, the compartment and holding structure are made of the same material and produced during the printing process at the same time integrated into each other

Preferably, the pen holding structure comprises a plurality of holding members that protrude from the compartment wall into the pen compartment and form an engagement area in which a pen is able to be held by friction between at least one of the holding members and the compartment wall.

Preferably, the pen holding structure comprises a plurality of holding members that protrude from the compartment wall into the pen compartment and form an engagement area in which a pen is able to be held by friction between at least two of the holding members.

Preferably, the holding members are arranged on the compartment wall such that the at least one holding member and the compartment wall are respectively able to engage the pen from different radial directions, preferably from opposite directions.

Preferably, the holding members are arranged on the compartment wall such that the at least two holding members are respectively able to engage the pen from different radial directions, preferably from opposite directions.

Preferably, each holding member comprises a first flexure joint portion that, when a pen is inserted into the engagement area, causes the holding member to press against the pen.

Preferably, each holding member comprises a second flexure joint portion that is arranged at an opposite end of the respective holding member and that, when a pen is inserted into the engagement area, causes the holding member to press against the pen.

Preferably, each holding member has a rectangular shape and the ratio of width to length is from 1:3 to 1:20.

Preferably, each holding member has a thickness of more than 1 mm to 3 mm, preferably 2 mm.

Preferably, the pen holder is made from a polymer material, preferably a polyamide material, preferably PA12. Preferably, the compartment wall and/or the pen holding structure are made from a polymer material, polyamide material, preferably PA12.

The invention provides a pen holder arrangement comprising a previously described pen holder and a pen that is inserted into the pen compartment and held by the pen holding structure. Preferably, the pen holding structure is built-up along a build-up direction that is chosen to be lateral to a surface of the pen holding structure, and the surface faces the pen when the pen is inserted.

Preferably, the pen holding structure comprises a plurality of holding members that protrude from the compartment wall into the pen compartment and form an engagement area in which the pen is held by friction between at least one of the holding members and the compartment wall.

Preferably, the pen holding structure comprises a plurality of holding members that protrude from the compartment wall into the pen compartment and form an engagement area in which the pen is held by friction between at least two of the holding members.

Preferably, the holding members are arranged on the compartment wall such that the at least one holding member and the compartment wall respectively able engage the pen from different radial directions, preferably from opposite directions.

Preferably, the holding members are arranged on the compartment wall such that the at least two holding members respectively engage the pen from different radial directions, preferably from opposite directions.

Preferably, each holding member comprises a first flexure joint portion that causes the holding member to press against the pen that is inserted in the engagement area.

Preferably, each holding member comprises a second flexure joint portion that is arranged at an opposite end of the respective holding member as the first flexure joint portion and that causes the holding member to press against the pen that is inserted into the engagement area.

The invention further provides a vehicle cockpit comprising a preferred pen holder or preferred a pen holder arrangement.

The invention provides a method for manufacturing a preferred pen holder, the method comprising the performance of an additive manufacturing method, preferably a selective laser sintering method, to generate the pen holder.

Preferably, the pen holding structure is being built-up along a build-up direction that is chosen to be lateral to a surface of the pen holding structure, and the surface faces the pen when the pen is inserted.

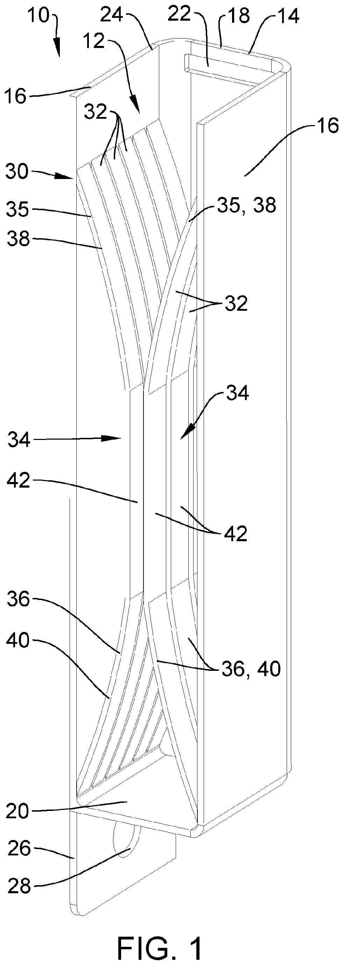

Embodiments of the invention are described in more detail with reference to the accompanying schematic drawings that are listed below
Fig. 1 depicts cut-away perspective of an embodiment of a pen holder according to the invention;
Fig. 2 is a photograph for comparison between a new and a tested pen holder; and
Fig. 3 depicts a pen holder according to the state of the art.

A pen holder 10 comprises a pen compartment 12. The pen compartment 12 is preferably box-shaped. The pen compartment 12 has a compartment wall 14. The compartment wall 14 has a large section 16 that has a greater width than a small section 18. The compartment wall 14 preferably has in total two large sections 16 and two small sections 18 that are arranged opposite each other. The compartment wall 14 may have a bottom section 20, which closes off the pen compartment 12 towards the bottom.

The compartment wall 14, preferably one or both small sections 18, may include a wall opening 22. Each wall opening 22 is preferably arranged opposite the bottom section 20.

The pen compartment 12 has an insertion opening 24 that is arranged at the top, preferably opposite the bottom section 20.

The compartment wall 14, preferably the large section 16, may include a mounting section 26 that protrudes from the plane of the large section 16. The mounting section 26 may include a mounting opening 28 for a bolt, for example.

The pen holder 10 comprises a pen holding structure 30. The pen holding structure 30 is arranged entirely within the pen compartment 12. Preferably, the pen holding structure 30 is distanced from the top of the pen holder 10.

The pen holder 10 has a plurality of holding members 32. The holding members 32 form an engagement area 34 in which an inserted pen can be engaged by the holding members 32.

Each holding member 32 is a strip-like member. The holding members 32 have a thickness that allow them to flex, when a pen is inserted into the engagement area 34.

The holding member 32 preferably protrudes from a top portion towards the bottom and meets the compartment wall 14 again. In other words, the holding member 32 arches from the top to the bottom inside of the pen compartment 12.

The holding member 32 has a first arc section 35 and a second arc section 36. Both arc sections 35, 36 are curved. The first and second arc sections 35, 36 form a first and second flexure joint portion 38, 40, respectively. Preferably, the first and second arc sections 35, 36 are directly adjacent to the compartment wall 14.

Furthermore, the holding member 32 has an engagement area 34 that is arranged between the first and second arc sections 35, 36. The engagement area 34 is preferably arranged directly adjacent to the first and second arc sections 35, 36.

The pen holder 10 is manufactured by additive manufacturing, such as selective laser sintering or fused deposition modelling. Thus, all elements of the pen holder 10 are integrally formed as a single member. Preferably, the pen holder 10 is manufactured from PA12. As in this case all elements are made from the same material, the pen holder 10 is integrally formed as a single unitary (meaning of the same material) member. The build-up direction is chosen to be along the short side of the pen holder 10, i.e. along the normal direction of a small section 18.

It should be noted that different materials are possible for the pen compartment 12 and the pen holding structure 30. It is preferred that the pen holding structure 30 is made of PA12.

A pen can be easily inserted through the insertion opening 24 and is guided by the shape of the pen holding structure 30 towards the engagement area 34, where the pen is held by friction due to deformation of one or more of the holding members 32.

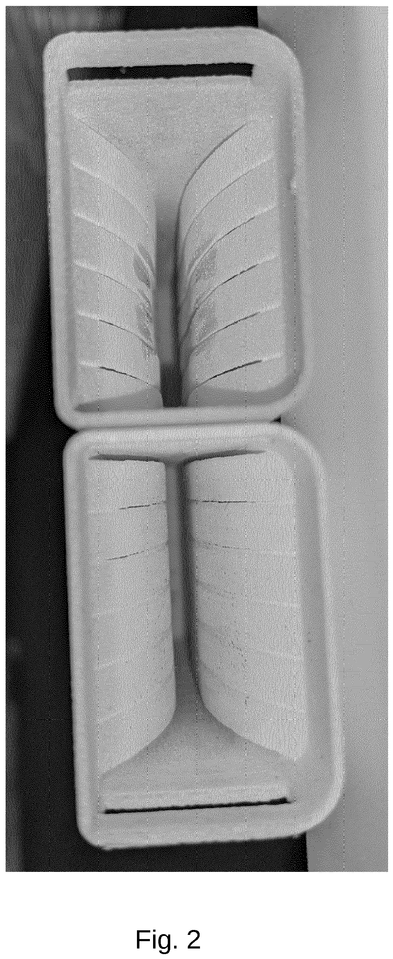

Fig. 2 shows the results of a 250.000 cycle insertion-removal test on the pen holder 10 according to the invention. The pen holder 10 was tested at -20 °C and +55 °C for 50.000 cycles each. The remaining tests were conducted at room temperature. Although small deformations of and some wear on the holding members is visible, the function of the pen holder 10 has not decreased.

Surprisingly, it was found that this configuration of the pen holder 10 has a longer usable life-span than the pen holders 110 currently in use. It was not at all to be expected that the pen holder 10 that is completely made in polymer drastically exceeds the life time of a metallic pen holder 110.

In order to improve longevity of pen holders, the invention proposes to form a pen compartment (12) and a pen holding structure (30) by additive manufacturing of a polymer material, such as PA12. The pen is held by friction within the pen compartment (14) and can be easily inserted and removed. Such a pen holder has a usage life of at least 250.000 insertion-removal cycles.

### List of reference signs:

- 10: pen holder
- 12: pen compartment
- 14: compartment wall
- 16: large section
- 18: small section
- 20: bottom section
- 22: wall opening
- 24: insertion opening
- 26: mounting section
- 28: mounting opening
- 30: pen holding structure
- 32: holding member
- 34: engagement area
- 35: first arc section
- 36: second arc section
- 38: first flexure joint portion
- 40: second flexure joint portion

- 110: pen holder
- 112: pen compartment
- 114: compartment wall
- 116: opening
- 118: holding structure
- 120: holding member

## Claims

1. A pen holder (10), preferably for a vehicle cockpit, the pen holder configured for holding at least one pen and comprising:
- a pen compartment (12) that is configured for storing the pen and has a compartment wall (14); and
- a pen holding structure (30) that is arranged within the pen compartment (12) and configured to hold the pen by friction, wherein the pen compartment (12) and the pen holding structure (30) are integrally formed as a single member.

2. The pen holder (10) according to claim 1, wherein the pen holding structure (30) comprises a plurality of holding members (32) that protrude from the compartment wall (14) into the pen compartment (12) and form an engagement area (34) in which a pen is able to be held by friction between at least one of the holding members (32) and the compartment wall (14) or between at least two of the holding members (32).

3. The pen holder (10) according to claim 2, wherein the holding members (32) are arranged on the compartment wall (14) such that the at least one holding member (32) and the compartment wall (14) or the at least two holding members (32) are respectively able to engage the pen from different radial directions, preferably from opposite directions.

4. The pen holder (10) according to any of the claims 1 or 2, wherein each holding member (32) comprises a first flexure joint portion (38) that, when a pen is inserted into the engagement area (34), causes the holding member (32) to press against the pen.

5. The pen holder (10) according to claim 4, wherein each holding member (32) comprises a second flexure joint portion (40) that is arranged at an opposite end of the respective holding member (32) as the first flexure joint portion (38) and that, when a pen is inserted into the engagement area (34), causes the holding member (32) to press against the pen.

6. The pen holder (10) according to any of the claims 1 to 5, wherein each holding member (32) has a rectangular shape and the ratio of width to length is from 1:3 to 1:20.

7. The pen holder (10) according to any of the claims 1 to 6, wherein each holding member (32) has a thickness of more than 1 mm to 3 mm, preferably 2 mm.

8. The pen holder (10) according to any of the preceding claims, wherein the pen holder (10), preferably the compartment wall (14) and/or the pen holding structure (30), is made from a polymer material, preferably a polyamide material, preferably PA12.

9. A pen holder arrangement comprising a pen holder (10) according to any of the preceding claims and a pen that is inserted into the pen compartment (12) and held by the pen holding structure (30).

10. A vehicle cockpit comprising a pen holder (10) according to any of the claims 1 to 8 or a pen holder arrangement according to claim 9.

11. A method for manufacturing a pen holder (10) according to any of the claims 1 to 8, the method comprising the performance of an additive manufacturing method, preferably a selective laser sintering or fused deposition modelling method, to generate the pen holder (10).
